# EUROPÄISCHE PATENTSCHRIFT

(11) **EP 3 820 956 B1**
(45) Veröffentlichungstag und Bekanntmachung des Hinweises auf die Patenterteilung: **28.12.2022**
(21) Anmeldenummer: 19714196.3
(22) Anmeldetag: 26.03.2019
(51) Int. Cl.: C09J 7/21

(54) **VERWENDUNG EINES KLEBEBANDS**
USE OF AN ADHESIVE TAPE
UTILISATION D'UN RUBAN ADHÉSIF

(30) Priorität: 11.07.2018 DE 202018103986 U
(43) Veröffentlichungstag der Anmeldung: 19.05.2021
(73) Patentinhaber: Certoplast Technische Klebebänder GmbH, 42285 Wuppertal (DE)
(72) Erfinder: LEERMANN, Timo, 42369 Wuppertal (DE)
(74) Vertreter: Andrejewski - Honke Patent- und Rechtsanwälte Partnerschaft mbB
(86) Internationale Anmeldenummer: PCT/EP2019/057634
(87) Internationale Veröffentlichungsnummer: WO 2020/011409

(56) Entgegenhaltungen:
- WO-A1-2016/113132
- DE-A1-102015 121 562
- DATABASE WPI Week 200512 Thomson Scientific, London, GB; AN 2005-104387 XP002792606, -& JP 2005 002181 A (SURION TEC KK) 6. Januar 2005 (2005-01-06)
- DATABASE WPI Week 200013 Thomson Scientific, London, GB; AN 2000-142806 XP002792607, -& JP 2000 008005 A (DIATEX KK) 11. Januar 2000 (2000-01-11)
- DATABASE WPI Week 201171 Thomson Scientific, London, GB; AN 2011-N02342 XP002792608, -& JP 2011 206184 A (NITTO DENKO CORP) 20. Oktober 2011 (2011-10-20)

## Beschreibung

Die Erfindung betrifft die Verwendung wenigstens eines in einen Gewebeträger eines Klebebandes eingebrachten Markierungsfadens, wobei der Gewebeträger mit einer ein- oder beidseitig auf den Gewebeträger aufgebrachten Klebebeschichtung ausgerüstet ist, und wobei der Markierungsfaden als in den Gewebeträger beim Herstellungsvorgang eingearbeiteter Kett- und/oder Schussfaden ausgebildet ist.

Klebebänder und insbesondere Wickelbänder zum Bandagieren von Kabelbündeln in Automobilen müssen vielfältigen Anforderungen genügen. Hierzu gehört zunächst einmal eine besondere Medienbeständigkeit gegenüber beispielsweise Öl und Benzin. Auch wird eine große Temperaturbeständigkeit gefordert. Tatsächlich sollen solche Wickelbänder im Bereich zwischen -50° C bzw. -40° C bis hin zu +150° C und mehr eingesetzt werden können. Darüber hinaus werden geringe Schallemissionen angestrebt, beispielsweise derart, dass Klappergeräusche eines derart umwickelten Kabelbaums oder von Kabelbündeln möglichst verhindert werden.

Ergänzend zu diesen zuvor beschriebenen Anforderungen wird oftmals auch eine hohe Abriebbeständigkeit gefordert um ein Durchscheuern an der Karosserie zu verhindern. Die Abriebbeständigkeit lässt sich dabei gemäß dem Stand der Technik beispielsweise nach der WO 2005/085379 A1 in Anlehnung an die Norm LV 312 (2009) bestimmen. Tatsächlich werden an dieser Stelle in der Regel verschiedene Abriebklassen voneinander unterschieden.

Je nach den Anforderungen des Automobilherstellers bzw. den Einbau- und Betriebsbedingungen des mit dem betreffenden Kabelbaum ausgerüsteten Kraftfahrzeuges kommen ganz unterschiedliche Klebebänder bzw. Wickelbänder zum Einsatz. Diese werden in der Regel manuell um das betreffende Kabelbündel von einem Montagewerker herumgewickelt. Zur Unterscheidung der einzelnen Klebebänder sind diese mit entsprechenden Verpackungen oder auch innenseitig eines Rollenkerns ausgerüsteten Markierungen, Produktkennzeichnungen usw. versehen. Dadurch kann der Montagewerker das entsprechend vorgeschriebene Klebeband auswählen und die Kabelbündel bzw. den Kabelsatz entsprechend konfektionieren.

Der konfektionierte Kabelbaum wird anschließend in der Regel beim Automobilhersteller verbaut. Dies geschieht oftmals örtlich mehr oder minder weit entfernt von der Kabelbaumherstellung. Dadurch sind grundsätzlich Verwechselungen möglich. Außerdem werden heutzutage zunehmend detaillierte Eingangs- und Qualitätskontrollen gefordert. Dem fertig konfektionierten Kabelbaum kann jedoch nicht angesehen werden, ob das vorgeschriebene Klebeband verbaut worden ist oder nicht.

Zwar ist aus dem gattungsbildenden Stand der Technik nach der WO 2016/113132 A1 bereits ein durchgängiger Nähfaden bei einem solchen Klebeband als Markierung bekannt. Allerdings dient die Markierung als Positionierhilfe beim Bandagieren und ist zu diesem Zweck derart ausgebildet, dass auf einen jeweils am Objekt festgelegten vorauseilenden Wickel ein Folgewickel mit durch die Positionierhilfe vorgegebener Überlappung aufgeklebt wird.

Im Rahmen des nächstkommenden Standes der Technik nach der DE 10 2015 121 562 A1 wird ein hochtemperaturbeständiges farbiges und insbesondere orangefarbenes Klebeband beschrieben.

Derartige Signalfarben können unter anderem zur Kennzeichnung von Hochvoltleitungen in Elektrofahrzeugen eingesetzt werden. Bei dem an dieser Stelle zur Verwendung kommenden textilen Träger kann es sich auch um ein Gewebe handeln.

Der Erfindung liegt das technische Problem zugrunde, eine derartige Verwendung so weiterzuentwickeln, dass auch und insbesondere im verbauten Zustand eine Kontrolle dergestalt stattfinden kann, ob das entsprechend vorgegebene bzw. den Erfordernissen genügende Klebeband verbaut ist oder nicht.

Zur Lösung dieser technischen Problemstellung schlägt die Erfindung die Verwendung nach Anspruch 1 vor.

Die Erfindung arbeitet also mit einem Klebeband mit Gewebeträger, von dem wenigstens ein Schuss- bzw. Kettfaden als Markierungsfaden ausgelegt ist. Dabei dient der Markierungsfaden zur Kodierung einer oder mehrerer Eigenschaften des betreffenden Klebebandes, weist also eine Kodierung auf, welche zu einer oder mehrerer Eigenschaften des Klebebandes korrespondiert. Ferner können mit Hilfe mehrerer Markierungsfäden erfindungsgemäß und grundsätzlich auch ein oder mehrere geometrische Muster in den Gewebeträger eingebracht werden. Über dieses geometrische Muster lässt sich eine entsprechende Kodierung wiedergeben, die ihrerseits zu einer oder mehrerer der beschriebenen Eigenschaften des Klebebandes korrespondiert.

Dadurch entfällt ein zusätzlicher Herstellungsvorgang, wie er beispielsweise im Stand der Technik mit einem dort angesprochenen Nähfaden durch das hiermit verbundene Einnähen erforderlich ist. Vielmehr wird der Markierungsfaden erfindungsgemäß direkt beim Herstellungsvorgang des Gewebes in den Gewebeträger eingearbeitet.

Nach vorteilhafter Ausgestaltung ist der Markierungsfaden hinsichtlich seiner Feinheit an die übrigen Schussfäden angepasst bzw. die Feinheit des Markierungsfadens entspricht der Feinheit der übrigen Kettfäden. Dadurch wird der Webvorgang durch das Vorhandensein des Markierungsfadens nicht beeinträchtigt, sondern kann wie gewohnt vorgenommen und absolviert werden.

Typischerweise sind geeignete Gewebeträger für solche Klebebänder mit Fadenfeinheiten ausgerüstet, die zwischen 33 dtex und 550 dtex im Regelfall angesiedelt sind. Dabei müssen die Kett- und Schussfäden des fraglichen Gewebeträgers nicht notwendigerweise mit einer übereinstimmenden Fadenfeinheit ausgerüstet sein. Sondern es kann an dieser Stelle auch ein Gewebe zum Einsatz kommen, bei welchem die Kettfäden dicker als die Schussfäden ausgebildet sind, beispielsweise über eine auf die Breite bezogene Fadenstärke zwischen 2.000 dtex/cm bis 4.000 dtex/cm verfügen. Demgegenüber mögen die Schussfäden mit einer auf die Länge bezogenen Fadenstärke im Bereich von 8.000 dtex/cm bis 16.000 dtex/cm ausgerüstet sein.

Dabei wird im Allgemeinen so vorgegangen, dass der Markierungsfaden auf oder an einer Außenseite des Klebebandes im eingebauten Zustand sichtbar angeordnet ist. Eine solche Auslegung empfiehlt sich insbesondere für den Fall, dass der Gewebeträger des erfindungsgemäßen Klebebandes nicht als Monogewebe ausgebildet ist, was in der Regel die bevorzugte Variante darstellt. Sondern der Gewebeträger kann auch grundsätzlich aus zwei miteinander verbundenen Lagen von Einzelgeweben aufgebaut sein. Die beiden Lagen der Einzelgewebe mögen dabei durch einen Kleber miteinander gekoppelt sein oder auch durch gewebeeigene Fäden.

Jedenfalls ist es bei einem solchen als Laminat aufgebauten Gewebeträger vorteilhaft, wenn der Markierungsfaden auf oder an der Außenseite des Klebebandes in eingebautem Zustand sichtbar angeordnet ist. Auf den Fall des Laminates übertragen bedeutet dies, dass der Markierungsfaden letztlich in das in eingebautem Zustand nach außen hin weisende Einzelgewebe eingearbeitet ist, damit die zuvor beschriebene und gewünschte Qualitätskontrolle auch in eingebautem Zustand vorgenommen werden kann.

Damit der Markierungsfaden einwandfrei von den übrigen Kett- bzw. Schussfäden unterschieden werden kann und seiner Hinweisfunktion nachkommt, ist der Markierungsfaden erfindungsgemäß mit einer im Vergleich zu den übrigen Kett- und/oder Schussfäden kontrastierenden Farbe ausgerüstet. Beispielsweise mag der Markierungsfaden eine rote, gelbe, grüne oder blaue Farbe aufweisen, während die übrigen Fäden des Gewebes schwarz eingefärbt sind. Alternativ oder zusätzlich kann der Markierungsfaden erfindungsgemäß aber auch mit einer von den übrigen Kett- und/oder Schussfäden abweichenden Oberflächenbeschaffenheit versehen sein.

Eine solche abweichende Oberflächenbeschaffenheit des Markierungsfadens gegenüber den übrigen Kett- bzw. Schussfäden ergibt sich beispielsweise für den Fall, dass der Markierungsfaden texturiert ist. Auf diese Weise wird der Markierungsfaden mit einer Kräuselstruktur vergleichbar mit aus Naturfasern aufgebauten Fäden ausgerüstet. Wenn demgegenüber die übrigen Kett- und/oder Schussfäden über eine glatte Oberflächenstruktur verfügen, weil es sich hierbei vorteilhaft um Kunststofffäden aus beispielsweise Polyamid oder Polyester handelt, kann der Markierungsfaden aufgrund seiner Textur bzw. Kräuselstruktur an der Oberfläche hiervon unterschieden werden und sorgt für die gewünschte Markierung. Eine weitere Möglichkeit zur Realisierung einer abweichenden Oberflächenbeschaffenheit besteht darin, den Markierungsfaden zu zwirnen. Beispielsweise kann der Markierungsfaden mit 50, 100 oder noch mehr Drehungen pro Meter gezwirnt sein, wie dies im Detail in der DE 20 2016 100 057 U1 der Anmelderin beschrieben wird. Auch durch einen solchen Zwirnvorgang lässt sich die Oberflächenbeschaffenheit des Markierungsfadens im Vergleich zu den übrigen und nicht gezwirnten Kett- und/oder Schussfäden abweichend auslegen.

Eine weitere alternative oder ergänzende Möglichkeit zur Unterscheidung des Markierungsfadens von den übrigen Kett- und/oder Schussfäden sind denkbar. Typischerweise verfügt der erfindungsgemäße Gewebeträger über eine Leinwandbindung. Demgegenüber kann der Markierungsfaden in das Gewebe mit einer hiervon abweichenden Bindung eingebracht werden, insbesondere wenn mehrere solcher Markierungsfäden zum Einsatz kommen. Das lässt sich oftmals allerdings technisch schwer umsetzen, soll gleichwohl Erwähnung finden. Eine abweichende Verbindung im Vergleich zu der Leinwandbindung liegt unter Rückgriff auf eine Köperbindung, Atlasbindung oder auch Trikotbindung vor. Dabei wird man meistens mit mehreren abweichenden Bindungen gleicher Art arbeiten, um die Änderung in der Bindung einwandfrei optisch und mit bloßem Auge erkennen zu können. Jedenfalls lässt sich auch mit einer solchen Variation der Markierungsfaden erkennen und kann das erfindungsgemäße Klebeband individualisiert werden. Auf diese Weise können insbesondere einzelne oder mehrere Eigenschaften des Klebebandes optisch sichtbar abgebildet werden, und zwar auch und insbesondere in eingebautem Zustand.

Meistens ist der Markierungsfaden jedoch mit einer im Vergleich zu den übrigen Kett- und/oder Schussfäden kontrastierenden Farbe ausgerüstet, weil dann mit einer gleichen und übereinstimmenden Bindung für sämtliche Fäden des Gewebes gearbeitet werden kann und Änderungen im Produktionsprozess nicht vorgenommen werden müssen. Da die übrigen Kett- und/oder Schussfäden oftmals schwarz oder auch orange eingefärbt sind bzw. über eine durchgängige Farbe verfügen, kann der Markierungsfaden jeweils mit einer kontrastierenden Farbe hierzu ausgerüstet werden.

Um dies im Detail zu erreichen, wird der Markierungsfaden vorteilhaft bei seiner Herstellung gefärbt. Das kann durch beispielsweise Spinndüsenfärbung erfolgen. Hierbei wird der gewünschte Farbstoff einem Extruder für das Spinnen des Markierungsfadens zugegeben. Alternativ oder zusätzlich hierzu kann der Markierungsfaden auch nach seiner Herstellung gefärbt werden. Dazu mag die Erfindung auf ein sogenanntes Tauchfärben zurückgreifen. Hierbei wird der Faden in ein Färbebad bzw. eine Färbelösung eingetaucht und dringen auf diese Weise die Farbpartikel ins Innere des Markierungsfadens ein.

In diesem Zusammenhang besteht insgesamt die weitere Möglichkeit, dass der Markierungsfaden mit mehreren unterschiedlichen Farben und/oder variierende Oberflächenbeschaffenheiten ausgerüstet werden kann. Da die Herstellung solcher Markierungsfäden mit beispielsweise unterschiedlichen Farben aufwendig ist, wird man meistens mit Markierungsfäden durchgängig gleicher Farbe arbeiten. Dadurch besteht die Möglichkeit, dass der Markierungsfaden die Kodierung aufweist. Die Kodierung kann beispielsweise von der zugehörigen Farbe des Markierungsfadens vorgegeben werden.

Wenn dann der Markierungsfaden zusätzlich noch texturiert oder gezwirnt ist, wird deutlich, dass sich eine praktisch beliebig große Anzahl an Kodierungen für das erfindungsgemäße Klebeband realisieren lässt, und zwar bereits dann, wenn auf nur einen einzigen Markierungsfaden zurückgegriffen wird. Wie bereits erläutert, spiegelt die Kodierung eine oder mehrere Eigenschaften des Klebebandes wieder.

Als Eigenschaften des Klebebandes kann der Markierungsfaden beispielsweise auf seine Temperaturbeständigkeit hinweisen. Tatsächlich werden solche Klebebänder beispielsweise dahingehend charakterisiert, dass bei einer bestimmten Temperatur unter Berücksichtigung einer Behandlungsdauer von typischerweise bis zu 3.000 Stunden keine signifikante Entfärbung des Gewebeträgers stattfindet, wie dies in der Norm LV 312 im Detail beschrieben wird. Dazu werden in der Praxis Temperaturklassen T1 bis T5 voneinander unterschieden.

Die Erfüllung der Temperaturklasse T3 korrespondiert dazu, dass bis zu einer Temperatur von 125° C innerhalb der angegebenen Zeit keine Entfärbungen beobachtet werden. Die Temperaturklasse T4 gehört zu einer Beständigkeit bis zu 150° C und die Temperaturklasse T5 sogar zu einer Temperaturbeständigkeit bis zu 175° C, wie dies im Detail in der DE 20 2018 101 649 U1 der Anmelderin mit dort genannten weiteren Nachweisen beschrieben wird. Jedenfalls können beispielhaft die vorgenannten Temperaturklassen T1 bis T5 durch insgesamt fünf verschiedene Farben des Markierungsfadens abgebildet werden. Dadurch lässt sich auch in eingebautem Zustand des Klebebandes bzw. anhand des den Kabelsatz zusammenfassenden Wickels auch im Nachhinein festgestellt werden, ob das für den Einsatzzweck geeignete Klebeband der vorgeschriebenen Temperaturklasse verbaut worden ist oder nicht.

Eine weitere und mithilfe des Markierungsfadens abbildbare Eigenschaft des Klebebandes stellt seine Abriebbeständigkeit dar. Tatsächlich lässt sich die Abriebbeständigkeit vergleichbar den zuvor behandelten Temperaturklassen in sogenannten Abriebklassen einteilen. Hier wird in der Praxis und im Anschluss an die Erläuterungen beispielsweise in der DE 20 2012 103 975 U1 mit den Abriebklassen A bis G gearbeitet, die in Anlehnung an die zuvor bereits genannte Norm LV 312 "Klebebänder für Kabelsätze in Kraftfahrzeugen" (1/2005 bzw. letzter Stand 10/2009) als gemeinsame Prüfrichtlinie der Firmen Audi, BMW, Mercedes und VW zum Einsatz kommen. Bei der Prüfung der Abriebbeständigkeit wird dabei ein Dorn eingesetzt, der einen Durchmesser von 5 mm hat und mit dem zu untersuchenden Klebeband ausgerüstet wird. Das Klebeband wird nun mit einem Schaber vorgegebener Kraft mit einer zu messenden Anzahl an Hüben schabend beaufschlagt, bis es durchgeschabt ist. Die Anzahl der Hübe stellt ein Kriterium für die Abriebklasse dar.

Aufgrund der zuvor beschriebenen Abriebklassen A bis G sind in diesem Fall beispielhaft insgesamt sieben unterschiedliche Farben des Markierungsfadens erforderlich, um die zugehörige Abriebklasse A bis G korrespondierend anzuzeigen und auch bei einer nachträglichen Überprüfung für jedermann sichtbar zu machen. Das heißt, in diesem Fall gibt die Farbe des Markierungsfadens die vom entsprechend ausgerüsteten Klebeband erreichte Abriebklasse vor.

Schließlich kann auch auf eine weitere Eigenschaft des Klebebandes im Hinblick auf seine Fähigkeiten zur Schalldämpfung mit Hilfe des Markierungsfadens aufmerksam gemacht werden. Auch in diesem Fall kann je nach geräuschdämpfenden Verhalten und entsprechend der Norm LV 312 mit unterschiedlichen Geräuschdämpfungsklassen gearbeitet werden, und zwar A, wenn keine Geräuschdämpfung mithilfe des Klebebandes erreicht wird bis hin zur Geräuschdämpfungsklasse E, die zu einer sehr hohen Geräuschdämpfung korrespondiert. Details zur Einteilung in die entsprechenden Geräuschdämpfungsklassen werden in der DE 10 2011 005 763 A1 beschrieben.

Aufgrund der insgesamt fünf unterschiedlichen Geräuschdämpfungsklassen A bis E ist es erforderlich, dass im Beispielfall mit fünf unterschiedlichen Farben des Markierungsfadens gearbeitet wird, um die fraglichen Geräuschdämpfungsklassen abbilden zu können. Jedenfalls wird deutlich, dass und wie der Markierungsfaden über unterschiedliche Eigenschaften des Klebebandes allgemein sichtbar und nachvollziehbar Auskunft gibt bzw. Auskunft geben kann. Dabei kann grundsätzlich mit nur einem Markierungsfaden gearbeitet werden. Im Regelfall wird man jedoch auf mehrere Markierungsfäden zurückgreifen, wenn beispielsweise unterschiedliche Eigenschaften des Klebebandes gleichzeitig und nachvollziehbar angezeigt werden sollen.

Der Markierungsfaden ist im Allgemeinen an das Material der übrigen Kett- und/oder Schussfäden angepasst. Wie zuvor bereits erläutert, handelt es sich typischerweise bei dem Markierungsfaden ebenso wie bei den übrigen Kett- und/oder Schussfäden insgesamt um Kunststofffäden. Beispielsweise sind sämtliche Fäden als Polyesterfäden oder auch Polyamidfäden ausgebildet. Grundsätzlich sind natürlich auch Kombinationen denkbar und werden von der Erfindung mit umfasst.

Sofern erfindungsgemäß mehrere Markierungsfäden zum Einsatz kommen, kann jeder der einzelnen Markierungsfäden eine eigene Eigenschaft repräsentieren und nachvollziehbar angeben. Beispielsweise mag ein Markierungsfaden zur vom Klebeband erreichten Temperaturklasse korrespondieren. Ein anderer Markierungsfaden kann dann die Abriebbeständigkeit des Klebebandes wiedergeben. Ein weiterer dritter Markierungsfaden mag sein Fogging-Verhalten oder seine Schalldämpfungseigenschaften sichtbar machen. Auf diese Weise definieren die Markierungsfäden zusammengenommen eine Kodierung, welche die eine oder die mehreren Eigenschaften des Klebebandes wie beschrieben wiedergibt.

Weil es sich bei dem Markierungsfaden um einen Kett- und/oder Schussfaden handelt, können mithilfe mehrerer Markierungsfäden grundsätzlich auch ein oder mehrere geometrische Muster in den Gewebeträger eingebracht werden. Über dieses geometrische Muster kann eine entsprechende Kodierung wiedergegeben werden, die ihrerseits zu einer oder mehrerer der beschriebenen Eigenschaften des Klebebandes korrespondiert.

Im Ergebnis wird ein Klebeband zur Verfügung gestellt, welches zum ersten Mal eine umfassende Kontrolle der richtigen Ausrüstung des hiermit ausgerüsteten Kabelsatzes in konfektioniertem Zustand ermöglicht. Denn der eine oder die mehreren Markierungsfäden lassen sich so kodieren, dass hierüber ganz unterschiedliche Eigenschaften des Klebebandes nach außen hin sichtbar werden. Bei diesen Eigenschaften kann es sich um die von dem betreffenden Klebeband erreichte Temperaturklasse, Abriebbeständigkeit, Schalldämpfungseigenschaften etc. handeln, so dass eine umfassende und eindeutige Charakterisierung des Klebebandes zur Verfügung gestellt wird, und zwar auch und insbesondere im den Kabelsatz konfektionierenden Zustand. Das war bisher in dieser Form nicht möglich. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: das erfindungsgemäße Klebeband in einer ersten Variante mit einem eingefärbten Markierungsfaden,
- Fig. 2: einen alternativen erfindungsgemäßen Gegenstand mit einem Markierungsfaden abweichender Oberflächengestaltung,
- Fig. 3: eine weitere Variante der Erfindung mit einem Markierungsfaden abweichender Bindung und
- Fig. 4: schematisch den Einsatz mehrerer Markierungsfäden zur Realisierung geometrischer Muster.

In den Figuren ist ein Klebeband dargestellt, bei welchem es sich um ein Wickelband zum Bandagieren von Kabelbündeln in Automobilen handelt. Mithilfe des Wickelbandes werden Kabelbündel bzw. Kabelsätze in Automobilen konfektioniert, wie dies in dem den Ausgangspunkt darstellenden Stand der Technik nach der WO 2016/113132 A1 im Detail beschrieben und bildlich dargestellt ist. Dazu wird das Klebeband wendeiförmig um die einzelnen Kabel herumgeführt.

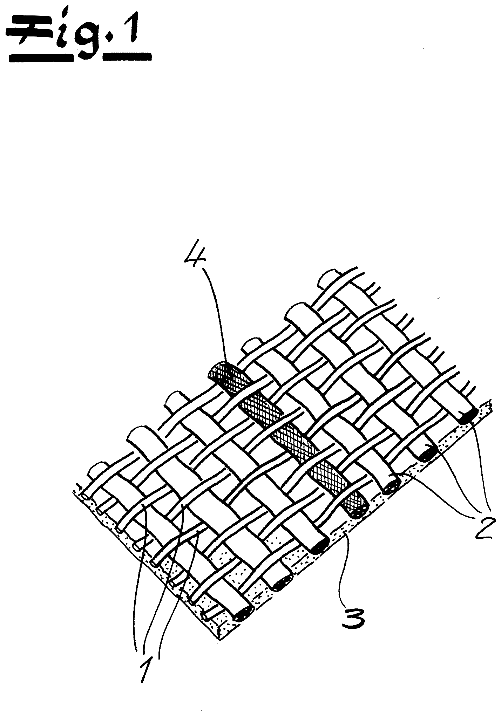

Das Klebeband bzw. Wickelband nach der Erfindung ist zu diesem Zweck mit einem Gewebeträger 1, 2 ausgerüstet. Der Gewebeträger 1, 2 setzt sich seinerseits aus Kettfäden 1 und Schussfäden 2 zusammen. Anhand der Darstellung in der Fig. 1 erkennt man, dass die Schussfäden 2 über eine deutlich größere Feinheit als die Kettfäden 1 verfügen, was selbstverständlich nur beispielhaft zu betrachten ist und keinesfalls einschränkend gilt. Nach dem Ausführungsbeispiel verfügt der Gewebeträger 1, 2 über ein Trägergewicht im Bereich von 50 g/m² bis 500 g/m². Außerdem handelt es sich bei dem dargestellten Gewebeträger 1, 2 um ein Monogewebe, wenngleich grundsätzlich auch Mehrfachgewebe, Laminate aus dem Gewebeträger 1, 2 und einem Vlies, einer Schaumstoff- oder einer Kunststofffolie möglich sind.

Der Gewebeträger 1, 2 ist auf zumindest einer Seite mit einer Klebebeschichtung 3 ausgerüstet. Die Klebebeschichtung 3 mag zu diesem Zweck auf den Gewebeträger 1, 2 mit einer Flächenmasse im Bereich von 50 g/m² bis 250 g/m² aufgebracht werden. Als Kleber kann nicht einschränkend ein Schmelzhaftkleber (hotmelt) auf den Gewebeträger 1, 2 aufgebracht werden. Nach dem Ausführungsbeispiel ist die Klebebeschichtung 3 lediglich einseitig auf den Gewebeträger 1, 2 aufgebracht. In konfektioniertem Zustand weist die Klebebeschichtung 3 in Richtung auf die zu bündelnden Kabel, wohingegen der Gewebeträger 1, 2 nach außen weist und damit sichtbar ist.

Von entscheidender und erfindungsgemäßer Bedeutung ist dann noch ein in den Gewebeträger 1, 2 eingebrachter Markierungsfaden 4, welcher beim Ausführungsbeispiel nach der Fig. 1 als Schussfaden 4 in den Gewebeträger 1, 2 beim Herstellungsvorgang eingearbeitet worden ist. Der eine (einzige) Markierungsfaden 4 beim Ausführungsbeispiel nach der Fig. 1 ist spinndüsengefärbt, wie dies die Fig. 1 andeutet. Außerdem verfügt der Markierungsfaden 4 über die gleiche Feinheit wie die übrigen Schussfäden 2 des Gewebeträgers 1, 2. Die Farbe des Markierungsfadens 4 kontrastiert zur Farbe der übrigen Fäden 1, 2.

Je nach der Farbe des Markierungsfadens 4 kann das Klebeband hinsichtlich seiner Eigenschaften qualifiziert werden. Beispielsweise mag über die Farbe des Markierungsfadens 4 die vom erfindungsgemäßen Klebeband erreichte Temperaturklasse angezeigt werden. Dazu ist der Markierungsfaden 4 auf bzw. an der Außenseite des Klebebandes in eingebautem Zustand sichtbar angeordnet. Das heißt, sobald das erfindungsgemäße Klebeband wendeiförmig um die Kabelbündel bzw. den Kabelsatz herumgewickelt wird, lässt sich gleichwohl der Markierungsfaden 4 mit seiner von den übrigen Fäden 1, 2 kontrastierenden Farbe am fertig konfektionierten Kabelsatz erkennen. Zu diesem Zweck mag der Markierungsfaden beispielsweise rot oder weiß oder braun eingefärbt sein, was zu den typischerweise schwarz eingefärbten übrigen Fäden 1, 2 des Gewebeträgers 1, 2 kontrastiert. Je nach der zuvor angegebenen Farbe mag hierzu so eine entsprechende Temperaturklasse gehören, beispielsweise braun zur Temperaturklasse T5, weiß zur Temperaturklasse T4 und schließlich rot zur Temperaturklasse T3.

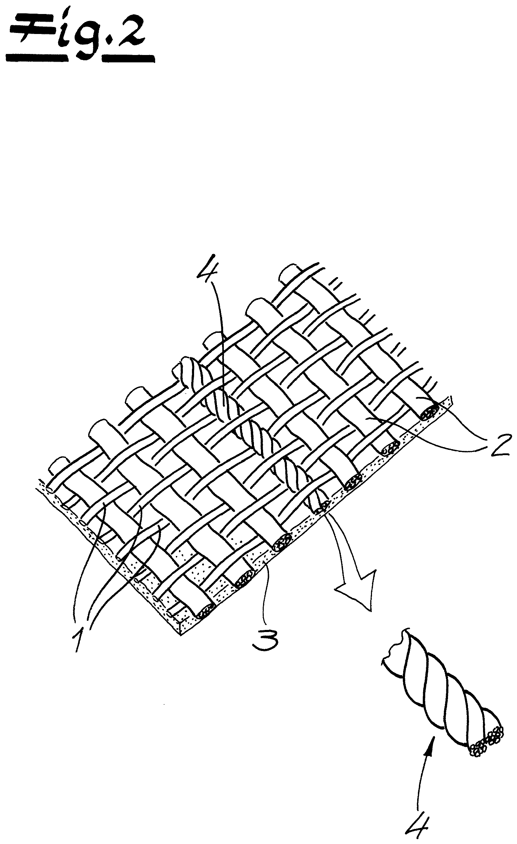

In der Fig. 2 ist eine Variante des Markierungsfadens 4 derart dargestellt, dass der Markierungsfaden 4 über eine im Vergleich zu den übrigen Kett- und Schussfäden 1, 2 abweichende Oberflächenbeschaffung verfügt. Diese abweichende Oberflächenbeschaffenheit des einzigen Markierungsfadens 4 nach der Darstellung in der Fig. 2 ergibt sich dadurch, dass der Markierungsfaden 4 um seine Längsachse gezwirnt ist, wie dies in der vergrößerten Darstellung in der Fig. 2 wiedergegeben ist. Die gezwirnte Auslegung des Markierungsfadens 4 führt zu einer abweichenden Oberflächenbeschaffenheit im Vergleich zu den an ihrer Oberfläche ansonsten glatt ausgelegten übrigen Fäden 1, 2. Dabei ist es denkbar, dass unterschiedliche Zwirngrade, das heißt Drehungen des Markierungsfadens 4 um seine Längsachse, wiederum zu verschiedenen Temperaturklassen korrespondieren, die auf diese Weise von jedermann auch in eingebautem Zustand des Klebebandes überprüft und erfasst werden können.

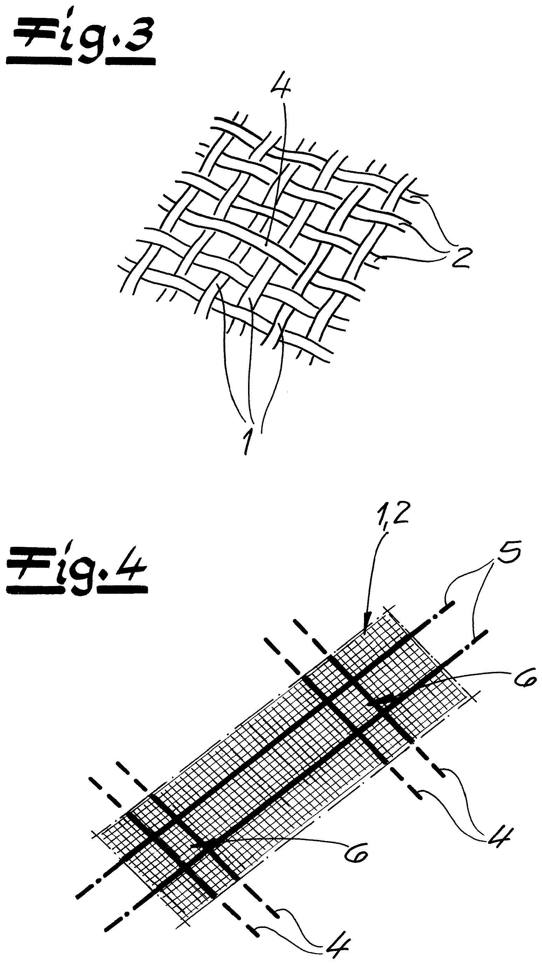

Im Rahmen der Fig. 3 ist eine weitere Variante des Markierungsfadens 4 dargestellt. Hier verfügt der Markierungsfaden 4 über eine im Vergleich zu den übrigen Fäden 1, 2 abweichende Bindung. Tatsächlich sind die übrigen Kett- und Schussfäden in Leinwandbindung zu dem Gewebeträger 1, 2 vereinigt. Demgegenüber verfügt der Schussfaden 4 über eine Köperbindung. Meistens wird man an dieser Stelle mit mehreren Schussfäden 4 in Köperbindung arbeiten, um die abweichende Bindungsart optisch einwandfrei erfassen zu können. Das heißt, der betreffende Schussfaden bzw. die mehreren betreffenden Schussfäden 4 gehen unter einem zugehörigen Kettfaden 1 hindurch und danach über mindestens zwei korrespondierende Kettfäden bzw. über drei Kettfäden 1 hinweg. Demgegenüber zeichnet sich die Leinwandbindung der übrigen Fäden 1, 2 dadurch aus, dass der jeweilige Schussfaden 2 unter einem Kettfaden 1 hindurch und danach über lediglich einen Kettfaden 1 hinweg geht.

Auf diese Weise verfügt der Markierungsfaden 4 erneut über eine abweichende optische Auslegung, die auch in verbautem Zustand bzw. bei einem mit dem betreffenden Klebeband konfektionierten Kabelbaum auch nachträglich festgestellt werden kann. Dabei mag die Anzahl der von dem Schussfaden 2 überbrückten Kettfäden 1 als Maßstab für die mithilfe des Markierungsfadens 4 angezeigte Eigenschaft fungieren. Beispielsweise können zwei überbrückte Kettfäden 1 im Rahmen der Köperbindung des Markierungsfadens 4 zur Temperaturklasse T3 und drei überbrückte Kettfäden 2 zur Temperaturklasse T4 gehören. Vier überbrückte Kettfäden 2 korrespondieren demgegenüber zu der Temperaturklasse T5.

In der Fig. 4 ist schließlich eine Variante dargestellt, bei welcher mit mehreren Markierungsfäden 4, 5 gearbeitet wird. Tatsächlich sind an dieser Stelle insgesamt vier als Schussfäden in das Gewebe 1, 2 eingebrachte Markierungsfäden 4 ebenso wie zwei als Kettfäden ausgelegte weitere Markierungsfäden 5 realisiert. Auf diese Weise können die Markierungsfäden 4, 5 zusammengenommen eine Kodierung der Eigenschaften des dargestellten Klebebandes definieren. Beispielsweise beschreiben die Markierungsfäden 4, 5 im Rahmen der Darstellung nach der Fig. 4 ein geometrisches Muster in Gestalt von jeweils zwei umschlossenen Quadraten bzw. Rechtecken 6. Die Anzahl dieser Rechtecke bzw. Quadrate 6 kann je nach eingesetzten Markierungsfäden 4 als Schussfäden variiert werden, so dass auf diese Weise erneut eine Kodierung der Eigenschaften des erfindungsgemäßen Klebebandes realisiert und umgesetzt werden kann.

Beispielsweise mag ein Rechteck bzw. Quadrat 6 zur Temperaturklasse T1 gehören. Zwei Rechtecke 6 geben die Temperaturklasse T2 wieder usw. Darüber hinaus kann in diesem Zusammenhang auch mit unterschiedlichen Farben der Markierungsfäden 4, 5 gearbeitet werden, um die Anzahl der möglichen Kodierungen noch weiter zu erhöhen.

Insgesamt wird deutlich, dass besonders beim Einsatz mehrerer Markierungsfäden 4, 5 ein oder mehrere geometrische Muster, vorliegend Rechtecke oder Quadrate 6 als Kodierung beschrieben werden können. Dadurch besteht insgesamt und abschließend die Möglichkeit, das erfindungsgemäße Klebeband mithilfe des einen Markierungsfadens 4 bzw. der mehreren Markierungsfäden 4, 5 hinsichtlich der gewünschten und zu überprüfenden Eigenschaften umfassend zu charakterisieren. Das alles gelingt ausdrücklich auch im Zusammenhang mit einem fertig konfektionierten Kabelbaum und entsprechend verbautem Klebeband. Hierin sind die wesentlichen Vorteile zu sehen.

## Patentansprüche

1. Verwendung wenigstens eines in einen Gewebeträger (1, 2) eines Klebebandes eingebrachten Markierungsfadens (4, 5) zur Kodierung einer oder mehrerer Eigenschaften des betreffenden Klebebandes, wobei
der Gewebeträger (1, 2) mit einer ein- oder beidseitig auf den Gewebeträger (1, 2) aufgebrachten Klebebeschichtung (3) ausgerüstet ist, wobei ferner
der Markierungsfaden (4, 5) als in den Gewebeträger (1, 2) beim Herstellungsvorgang eingearbeiteter Kett- und/oder Schussfaden (4, 5) ausgebildet ist, wobei weiter
der Markierungsfaden (4, 5) mit einer im Vergleich zu den übrigen Kett- und/oder Schussfäden (1, 2) kontrastierenden Farbe und/oder abweichenden Oberflächenbeschaffenheit ausgerüstet ist, und wobei
mehrere Markierungsfäden (4, 5) zusammengenommen ein geometrisches Muster (6) als Kodierung beschreiben.

2. Verwendung nach Anspruch 1, **dadurch gekennzeichnet, dass** der Markierungsfaden (4, 5) hinsichtlich seiner Feinheit an die übrigen Kett- und/oder Schussfäden (1, 2) angepasst ist.

3. Verwendung nach Anspruch 1 oder 2, **dadurch gekennzeichnet, dass** der Markierungsfaden (4, 5) auf oder an einer Außenseite des Klebebandes in eingebautem Zustand sichtbar angeordnet ist.

4. Verwendung nach einem der Ansprüche 1 bis 3, **dadurch gekennzeichnet, dass** der Markierungsfaden (4, 5) bei seiner Herstellung gefärbt wird, beispielsweise durch Spinndüsenfärbung.

5. Verwendung nach einem der Ansprüche 1 bis 4, **dadurch gekennzeichnet, dass** der Markierungsfaden (4, 5) nach seiner Herstellung gefärbt wird, beispielsweise durch Tauchfärben.

6. Verwendung nach einem der Ansprüche 1 bis 5, **dadurch gekennzeichnet, dass** der Markierungsfaden (4, 5) mit mehreren unterschiedlichen Farben und/oder variierenden Oberflächenbeschaffenheiten ausgerüstet ist.

7. Verwendung nach einem der Ansprüche 1 bis 6, **dadurch gekennzeichnet, dass** als Eigenschaften des Klebebandes seine Temperaturbeständigkeit und/oder Abriebbeständigkeit und/oder seine Schalldämpfungseigenschaften mithilfe der Kodierung des Markierungsfadens (4, 5) angezeigt werden.

8. Verwendung nach einem der Ansprüche 1 bis 7, **dadurch gekennzeichnet, dass** der Markierungsfaden (4, 5) an das Material der übrigen Kett- und/oder Schussfäden (1, 2) angepasst ist, beispielsweise als Polyesterfaden oder Polyamidfaden, ausgebildet ist.

9. Verwendung nach einem der Ansprüche 1 bis 8, **dadurch gekennzeichnet, dass** das Klebeband als Wickelband zum Bandagieren langgestreckter Objekte wie beispielsweise von Kabeln in Automobilen ausgebildet ist.

## Claims

1. Use of at least one marking thread (4, 5) introduced into a fabric support (1, 2) of an adhesive tape for encoding one or more properties of the adhesive tape concerned, wherein
the fabric support (1, 2) is furnished with an adhesive coating (3) applied to one or both sides of the fabric support (1, 2), wherein further
the marking thread (4, 5) is embodied as warp and/or weft threads (4, 5) worked into the fabric support (1, 2) during the production process, wherein further
the marking thread (4, 5) has a colour that contrasts with and/or a surface quality that differs from the other warp and/or weft threads (1, 2), and wherein
multiple marking threads (4, 5) combined describe a geometrical pattern (6) as encoding.

2. Use according to Claim 1, **characterized in that** the marking thread (4, 5) is adapted to the other warp and/or weft threads (1, 2) in terms of its fineness.

3. Use according to Claim 1 or 2, **characterized in that** when incorporated the marking thread (4, 5) is arranged so as to be visible on or against an outer side of the adhesive tape.

4. Use according to any one of Claims 1 to 3, **characterized in that** the marking thread (4, 5) is dyed while it is being manufactured, for example by spinneret dyeing.

5. Use according to any one of Claims 1 to 4, **characterized in that** the marking thread (4, 5) is dyed after it has been manufactured, for example by dip dyeing.

6. Use according to any one of Claims 1 to 5, **characterized in that** the marking thread (4, 5) is furnished with multiple different colours and/or varying surface qualities.

7. Use according to any one of Claims 1 to 6, **characterized in that** the heat resistance and/or resistance to wear and/or sound damping properties are shown as the properties thereof using the encoding of the marking thread (4, 5).

8. Use according to any one of Claims 1 to 7, **characterized in that** the marking thread (4, 5) is adapted to the material of the other warp and/or weft threads (1, 2), constructed as polyester threads or polyamide threads, for example.

9. Use according to any one of Claims 1 to 8, **characterized in that** the adhesive tape is constructed as a wrapping tape for wrapping around elongated objects such as cables in automobiles.

## Revendications

1. Utilisation d'au moins un fil de repérage (4, 5) incorporé dans un support tissé (1, 2) d'une bande adhésive pour la codification d'une ou de plusieurs propriétés de la bande adhésive concernée, sachant que,
le support tissé (1, 2) est doté d'un revêtement adhésif (3) appliqué d'un ou des deux côtés sur le support tissé (1, 2), sachant en plus que
le fil de repérage (4, 5) est constitué comme un fil de chaîne et/ou fil de trame (4, 5) élaboré dans le support tissé (1, 2) lors d'une opération de fabrication, sachant en outre
le fil de repérage (4, 5) est doté d'une couleur contrastante en comparaison des autres fils de chaîne et/ou fils de trame (1, 2) et/ou d'un état de surface divergent, et sachant que
plusieurs fils de repérage (4, 5), pris ensemble, décrivent un motif géométrique (6) en tant que codification.

2. Utilisation selon la revendication 1, **caractérisée en ce que** le fil de repérage (4, 5) est adapté eu égard à sa finesse aux autres fils de chaîne et/ou fils de trame (1, 2).

3. Utilisation selon la revendication 1 ou 2, **caractérisée en ce que** le fil de repérage (4, 5) est disposé à l'état monté de façon visible sur ou près d'un côté extérieur de la bande adhésive.

4. Utilisation selon l'une quelconque des revendications 1 à 3, **caractérisée en ce que** le fil de repérage (4, 5) est teinté lors de sa fabrication, par exemple par teinture dans la masse.

5. Utilisation selon l'une quelconque des revendications 1 à 4, **caractérisée en ce que** le fil de repérage (4, 5) est teinté après sa fabrication, par exemple par teinture par immersion.

6. Utilisation selon l'une quelconque des revendications 1 à 5, **caractérisée en ce que** le fil de repérage (4, 5) est doté de plusieurs couleurs différentes et/ou d'états de surface variables.

7. Utilisation selon l'une quelconque des revendications 1 à 6, **caractérisée en ce que** la résistance à la température et/ou résistance à l'usure par frottement et/ou les propriétés d'insonorisation sont indiquées en tant que propriétés de la bande adhésive à l'aide de la codification du fil de repérage (4, 5).

8. Utilisation selon l'une quelconque des revendications 1 à 7, **caractérisée en ce que** le fil de repérage (4, 5) est adapté au matériau des autres fils de chaîne et/ou de trame (1, 2), est constitué par exemple sous la forme de fil en polyester ou fil en polyamide.

9. Utilisation selon l'une quelconque des revendications 1 à 8, **caractérisée en ce que** la bande adhésive est constituée sous la forme d'une bande d'enroulement pour enrubanner des objets allongés comme par exemple des câbles dans le secteur automobile.
